# EUROPEAN PATENT SPECIFICATION

(11) **EP 1 369 614 B1**
(45) Date of publication and mention of the grant of the patent: **09.11.2005**
(21) Application number: 03006925.6
(22) Date of filing: 12.05.1998
(51) Int. Cl.: F16F 1/02

(54) **Coated coil spring, particularly for automotive suspensions and corresponding method of obtaining**
Beschichtete Schraubenfeder, insbesondere für Fahrzeugaufhängungen und zugehöriges Herstellverfahren
Ressort hélicoidal revêtu, en particulier pour suspensions de véhicule et procédé d'obtention correspondant

(30) Priority: 16.05.1997 IT TO970416
(43) Date of publication of application: 10.12.2003
(62) Divisional of application: 98108636.6
(73) Proprietor: Rejna S.p.A., 10036 Settimo Torinese (TO) (IT)
(72) Inventor: Muzio, Carlo, 10015 Ivrea (IT)
(74) Representative: Jorio, Paolo

(56) References cited:
- DE-U- 6 924 200
- FR-A- 1 240 087
- GB-A- 1 235 445
- US-A- 5 258 082
- PATENT ABSTRACTS OF JAPAN vol. 006, no. 150 (M-148), 10 August 1982 (1982-08-10) & JP 57 069126 A (NHK SPRING CO LTD), 27 April 1982 (1982-04-27)
- PATENT ABSTRACTS OF JAPAN vol. 0062, no. 35 (C-136), 20 November 1982 (1982-11-20) & JP 57 136972 A (NIHON HATSUJIYOU KK), 24 August 1982 (1982-08-24)

## Description

The present invention relates to a process of obtaining a coil spring and to a coil spring, particularly for automotive suspensions, with a coating of polymeric material.

As is known, automotive suspensions commonly feature coil springs, the end turn of which normally rests on a metal supporting plate integral with the shock-absorbers. Direct connection of the spring to a metal element, however, does not prevent the spring from knocking against the plate when the vehicle is moving, and the noise produced is far from negligible, particularly on vehicles of modern design in which great care is taken to eliminate any source of noise.

To prevent the spring from knocking, special supports made of elastomeric material are used, and which are integral with the supporting plate and designed to receive the last turn of the spring. Such a solution, however, involves considerable cost and is therefore not used on recently designed vehicles.

Noise is also produced by the turns of the spring knocking against one another in use, and is especially noticeable in the case of variably flexible springs, which comprise a certain number of turns with a smaller pitch than the others, and which work in contact with one another over an already fairly low vehicle load.

Normal suspension spring coatings fail to provide for eliminating the above drawbacks.

The coil springs of automotive suspensions are normally given a thin coating of epoxy paint, primarily to protect the metal springs from corrosion. As is known, epoxy resins are classified as heat-setting polymeric materials, so that the resulting coatings (typically 40ö50 µm thick) are substantially rigid and fairly hard. To give a rough indication, the epoxy paints normally used for suspension springs have a hardness of about 35 degrees on the so-called "rocker-sword" scale (a special scale commonly used in the paint industry).

On account of the above properties, the coatings formed from such paints are fairly fragile, adhere closely to the metal surface of the springs, and in no way provide for damping the noise induced by connection of the spring to the supporting plate, or by the turns of the spring knocking against one another. Moreover, being so fragile, the coatings are worn off rapidly by mutual knocking of the turns of the spring, thus exposing the underlying metal to corrosion.

One possible solution - that of fitting the spring with a sheath of elastomeric or, at any rate, fairly pliable material - is difficult to actually implement, and practically impossible in the case of increasingly common variable-pitch springs. DE-GM6924200 and GB-A-1235445 as closest prior art discloses a painting method according to the preamble of Claim 1

It is an object of the present invention to provide a coil spring and a process to obtain a coil spring, particularly for automotive suspensions, designed to eliminate the aforementioned drawbacks, and which in particular allows the spring to produce very little in-service noise, is cheap and easy and effectively protect the spring against corrosion.

According to the present invention, there is provided a process as claimed in Claim 1 an automotive and a coil spring as claimed in claim 3.

GB-A-1235445 also discloses a coil spring with the features of the preamble of claim 3.

According to a preferred embodiment, the painted layer is formed from a thermoplastic polymeric material preferably selected from the group comprising the following commercial products : Smaltoplast™ , Desmopan™ and similar.

As such, the spring obtained by the method of the present invention is effectively protected against corrosion, while at the same time the damping effect of the polymeric coating interposed between the turns provides for greatly reducing the noise produced by the spring.

The spring coating according to the present invention may be applied easily and cheaply in the same way as conventional paints, but is surprisingly effective in terms of noise damping. That is, the coating performs in the same way as an elastomer : the hardness of the coating material in fact is similar to that of rubber, and much lower than that of paints normally used for this type of application (as stated, the hardness of a typical epoxy paint is about one order of magnitude higher).

A number of non-limiting embodiments of the present invention will be described by way of example with reference to the accompanying drawings, in which:
Figure 1 shows a section of part of a coil spring in accordance with the present invention;
Figure 2 shows a coil spring noise testing device;
Figure 3 shows the noise test results, using the Figure 2 device, of springs with different types of coating.

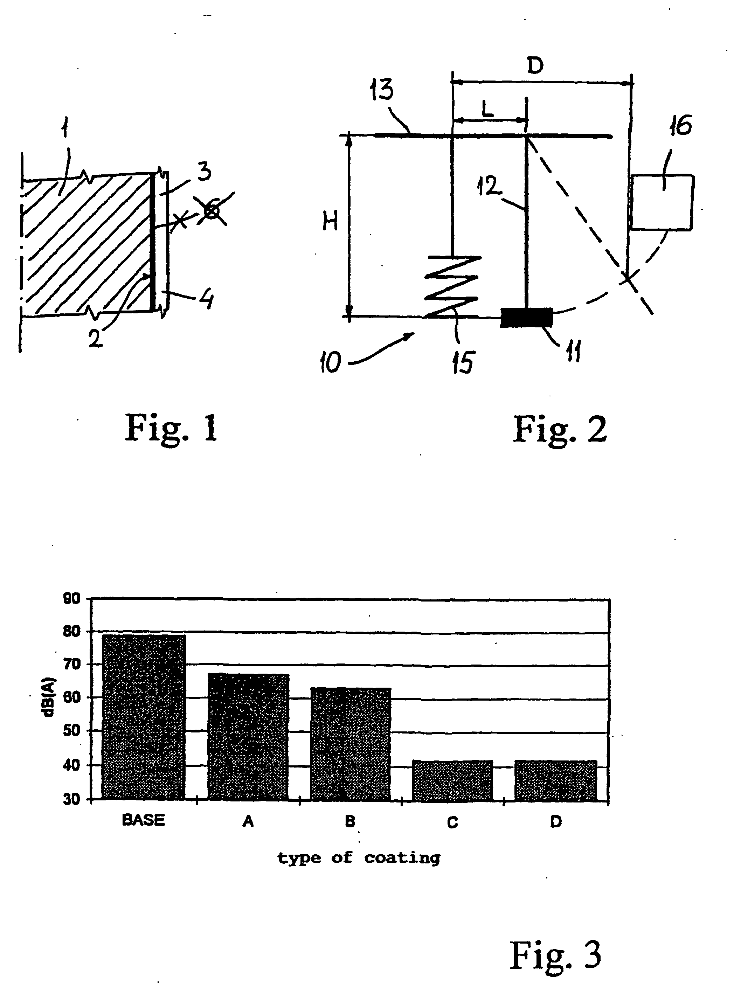

With reference to Figure 1, a known automotive suspension coil spring 1 comprises a metal body wound into turns, a lateral surface 2 of which is applied with a coating 3 of polymeric material.

In the example shown, coating 3 comprises a continuous layer 4, of 100 to 500 µm thickness, of a paint comprising a polymeric material of 50 to 100 Shore A hardness; which material is a thermoplastic polymer.

The polymeric paint with which coating 3 is formed is preferably a powdered paint. For example, as shown in detail later on, good results have been obtained using a range of commercial products such as Smaltoplast™, Desmopan™ and similar.

The coating according to the present invention may be applied easily during manufacture of the spring. The polymeric material of the coating in fact is applied after the steel wire has been wound, by hot permanent deformation, to form the spring, and while the spring is still at a relatively high temperature (about 200ö250°C) . The polymeric paint of the coating may, for example, be sprayed on to the surface of the spring, or applied by immersing the spring in a fluidized-bed bath containing the paint.

The coating is preferably applied directly to the surface of the spring with no preliminary application of adhesion promoters, so that, by virtue of the characteristics of the polymeric paint, which adheres poorly to metal substrates, and of the difference in shrinkage of the polymeric paint and spring material, the coating does not adhere completely to the surface of the spring, thus improving the damping performance of the coating. In other words, by not adhering completely to the surface of the spring, the coating according to the invention forms a sort of sheath about the spring, but with none of the practical disadvantages of an actual sheath, by being applied in the same way as conventional paint.

Figure 2 shows schematically a test device for determining the noise level of a coil spring. The device, indicated as a whole by 10, comprises a hammer 11 hung by a wire 12 (or by a rigid element) at a vertical distance H from a fixed support 13 so as to oscillate freely in a vertical plane. A spring 15 to be noise tested is also hung vertically-from fixed support 13 with a respective longitudinal axis at a distance L from wire 12. Like hammer 11, the last turn of spring 15 is also located at distance H from support 13. Device 10 also comprises a known detector (phonometer) 16 for measuring the noise level.

To determine the noise level of a spring 15 with a given type of coating, hammer 11 is set to a predetermined position, i.e. to a predetermined distance D from spring 15, and is dropped on to the spring. The noise generated by hammer 11 striking spring 15 is detected and its intensity determined by detector 16, so that the noise levels of springs with different types of coatings may be compared to determine the most effective.

Tests were carried out by the Applicant's technicians using a 0.5 kg steel hammer 11 hung 740 mm beneath support 13 and at a distance of 200 mm from the axis of spring 15; hammer 11 was dropped from a horizontal distance of 400 mm from the axis of spring 15 (that is, with reference to Figure 2 : H = 740 mm, L = 200 mm and D = 400 mm); and each spring tested was subjected to a succession of nine blows in 60 seconds.

Table 1 shows the test results, under the above conditions, of identical springs with different coatings, namely : a spring with a straightforward epoxy paint coating of the type currently used (indicated "base" in the Table); and springs with different polymeric material coatings (indicated "A", "B", "C" and "D" in the Table, with Abcite™, Plascoat PPA 571™, Smaltoplast™ and Desmopan™ coatings respectively).

The test results in Table 1 are reproduced graphically in Figure 3, which clearly shows the drastic reduction in noise level, as compared with a traditionally painted spring, by applying the coating according to the present invention. The best results were in fact obtained using PVC (Smaltoplast™) and Desmopan™.

**TABLE 1**

| Type of coating | Noise level dB(A) |
|---|---|
| BASE | 78.6 |
| A | 66.9 |
| B | 62.8 |
| C | 41.5 |
| D | 41.5 |

## Claims

1. A process for obtaining a coil spring, particularly for an automotive suspension, comprising the steps of
a) wounding a metal body into turns by hot permanent deformation;
b) while the wound metal body is still at a relatively high temperature, painting on a lateral surface of said turns a polymeric coating made of a polymeric material of a selected hardness and thickness,
wherein said polymeric material is chosen from the group consisting of PVC and PU having a Shore A hardness of 50 to 100; **characterized in that** said coating is obtained with a thickness ranging between 100 and 500 µm, so that, at the same time, said coil spring is effectively protected against corrosion and the noise generated by the coil spring is greatly reduced; **and in that**, in combination, said painting step is carried out so that, owing to the adherence characteristics of the chosen polymeric material and of the difference in shrinkage of said polymeric material and of said metal body, the coating does not adhere completely to said lateral surface.

2. A process according to Claim 1, wherein no preliminary application of adhesion promoters is carried out on said lateral surface of said turns before said painting step.

3. A coil spring, particularly for an automotive suspension, comprising a metal body wound into turns, and a coating of polymeric material on a lateral surface of said turns; **wherein** said coating is made of a polymeric material of PVC and/or PU with a Shore A hardness of 50 to 100 and a thickness of 100 to 500 µm; **characterized in that**, owing to the adherence characteristics of the chosen polymeric material and of the difference in shrinkage of said polymeric material and of said metal body, said coating does not adhere completely to said lateral surface; said coil spring being obtainable by the process of Claim 1.

## Patentansprüche

1. Verfahren zur Herstellung einer Spiralfeder, insbesondere für eine Fahrzeugaufhängung, umfassend die Schritte
a) Wickeln eines Metallkörpers zu Windungen durch Heißdauerverformung:
b) Aufstreichen auf eine Seitenoberfläche der Windungen einer polymeren Beschichtung, die aus einem polymeren Material einer gewählten Härte und Dicke hergestellt ist, während der aufgewickelte Metallkörper sich immer noch bei einer relativ hohen Temperatur befindet,
wobei das polymere Material aus der aus PVC und PU mit einer Shore A-Härte von 50 bis 100 bestehenden Gruppe gewählt wird; **dadurch gekennzeichnet, dass** die Beschichtung mit einer Dicke im Bereich zwischen 100 und 500 µm erhalten wird, so dass gleichzeitig die Spiralfeder wirksam geschützt wird gegen Korrosion und das durch die Spiralfeder erzeugte Geräusch stark reduziert wird; **und dass** in Kombination der Anstreichschritt so ausgeführt wird, dass aufgrund der Hafteigenschaften des gewählten polymeren Materials und des Schrumpfungsunterschieds des polymeren Materials und des Metallkörpers die Beschichtung nicht vollständig an der Seitenoberfläche haftet.

2. Verfahren nach Anspruch 1, wobei keine vorausgehende Aufbringung von Haftungsförderern auf der Seitenoberfläche der Windungen vor dem Anstreichschritt durchgeführt wird.

3. Spiralfeder, insbesondere für eine Fahrzeugaufhängung, umfassend einen in Windungen aufgewickelten Metallkörper und eine Beschichtung aus polymerem Material auf einer Seitenoberfläche der Windungen; **wobei** die Beschichtung aus einem polymeren Material aus PVC und/oder PU mit einer Shore A-Härte von 50 bis 100 und einer Dicke von 100 bis 500 µm hergestellt ist; **dadurch gekennzeichnet, dass** aufgrund der Hafteigenschaften des gewählten polymeren Materials und des Schrumpfungsunterschieds des polymeren Materials und des Metallkörpers die Beschichtung nicht vollständig an der Seitenoberfläche haftet; wobei die Spiralfeder durch das Verfahren gemäß Anspruch 1 erhältlich ist.

## Revendications

1. Procédé d'obtention d'un ressort, particulièrement pour une suspension de véhicule, consistant à :
a) enrouler un corps métallique en spires par déformation permanente à chaud ;
b) alors que le corps métallique enroulé est toujours à une température relativement élevée, peindre sur une surface latérale desdites spires un revêtement polymère composé d'un matériau polymère d'une dureté et d'une épaisseur sélectionnées,
dans lequel ledit matériau polymère est choisi à partir du groupe consistant en PVC et PU présentant une dureté Shore A entre 50 et 100 ; **caractérisé en ce que** ledit revêtement est obtenu avec une épaisseur s'échelonnant entre 100 et 500 µm afin que, dans le même temps, ledit ressort hélicoïdal soit efficacement protégé contre la corrosion et le bruit généré par le ressort hélicoïdal soit grandement réduit ; **et en ce que**, en combinaison, ladite étape de peinture est exécutée afin que, en raison des caractéristiques d'adhérence du matériau polymère choisi et de la différence de retrait dudit matériau polymère et dudit corps métallique, le revêtement n'adhère pas complètement à ladite surface latérale.

2. Procédé selon la revendication 1, dans lequel aucune application préliminaire d'accélérateurs d'adhésion n'est réalisée sur ladite surface latérale desdites spires avant ladite étape de peinture.

3. Ressort hélicoïdal, particulièrement pour une suspension de véhicule, comprenant un corps métallique enroulé en spires, et un revêtement de matériau polymère sur une surface latérale desdites spires ; **dans lequel** ledit revêtement est composé d'un matériau polymère en PVC et/ou PU avec une dureté Shore A entre 50 et 100 et une épaisseur entre 100 et 500 µm ; **caractérisé en ce que**, en raison des caractéristiques d'adhérence du matériau polymère choisi et de la différence de retrait dudit matériau polymère et dudit corps métallique, ledit revêtement n'adhère pas complètement à ladite surface latérale ; ledit ressort hélicoïdal pouvant être obtenu par le procédé de la revendication 1.
